# EUROPEAN PATENT APPLICATION

(11) **EP 4 704 227 A1**
(43) Date of publication of application: **04.03.2026**
(21) Application number: 23935452.5
(22) Date of filing: 18.12.2023
(51) Int. Cl.: H01M 50/105, H01M 10/613, H01M 10/647, H01M 10/6551, H01M 50/204, H01M 50/211

(54) **BATTERY CELL AND BATTERY MODULE**

(30) Priority: 26.04.2023 JP 2023072105
(71) Applicant: AESC Japan Ltd., Yokohama-shi, Kanagawa 220-0012 (JP)
(72) Inventor: NAKAI, Masayuki, Zama-shi, Kanagawa 252-0012 (JP)
(74) Representative: Mathys & Squire
(86) International application number: PCT/JP2023/045231
(87) International publication number: WO 2024/224681

(57) **Abstract**

A battery cell (10) includes a battery element (100) that has two end surfaces located opposite to each other and a predetermined portion located between the two end surfaces, and has a front terminal (310) or a rear terminal (320) disposed on at least one of the two end surfaces, and an exterior material (400) that has an accommodation portion (410) that defines an internal space for accommodating the battery element (100) and a pocket portion (420) that defines an internal space for allowing gas generated from the internal space of the accommodation portion (410) to enter. The pocket portion (420) is drawn out from a portion that covers the predetermined portion of the battery element (100) in the accommodation portion (410).

## Description

### TECHNICAL FIELD

The present invention relates to a battery cell and a battery module.

### BACKGROUND ART

In recent years, various battery cells have been developed. The battery cell includes a battery element including a positive electrode, a negative electrode, and a separator. The battery element is sealed with an exterior material. A terminal electrically connected to the battery element is drawn out from the exterior material.

Patent Document 1 discloses an example of a battery pack including a plurality of battery cells. Each battery cell includes a storage portion that stores the battery element, and an expansion portion that communicates with the storage portion. The expansion portion is expanded by gas generated by heat generation of the battery element. The distance between adjacent battery cells is widened by the expansion of the expansion portion. Therefore, a heat dissipation path is formed between the adjacent battery cells.

### RELATED DOCUMENT

### PATENT DOCUMENT

Patent Document 1: Japanese Unexamined Patent Publication No. 2021-170513

### SUMMARY OF THE INVENTION

### TECHNICAL PROBLEM

In the battery cell described in Patent Document 1, a terminal is drawn out from an upper surface of the battery element, and the storage portion and the expansion portion are in communication with each other at a lower surface of the battery element. Therefore, in a case where the expansion portion expands, the terminal drawn out from the upper surface of the battery element may tilt toward another battery cell. Therefore, the terminals of each of the adjacent battery cells may come into contact with each other. Alternatively, the terminal of one battery cell of the adjacent battery cells may come into contact with the other battery cell of the adjacent battery cells. Therefore, in the battery cell described in Patent Document 1, it may be difficult to suppress the short circuit between the adjacent battery cells in a case where the expansion portion expands.

An example of an object of the present invention is to suppress a short circuit between adjacent battery cells. Other objects of the present invention will become apparent from the description of the present specification.

### SOLUTION TO PROBLEM

An aspect of the present invention is as follows.
[1] A battery cell including:
   a battery element that has two end surfaces located opposite to each other and a predetermined portion located between the two end surfaces, and has a terminal disposed on at least one of the two end surfaces; and
   an exterior material that has a first portion that defines a first internal space in which the battery element is accommodated and a second portion that defines a second internal space for allowing a gas generated from the first internal space to enter,
   in which
   the second portion is drawn out from a portion that covers the predetermined portion of the battery element in the first portion.
[2] The battery cell according to [1], in which the first internal space and the second internal space are in communication with each other.
[3] The battery cell according to [1],
   in which the exterior material further has a temporary sealing portion located between the first portion and the second portion, and
   the temporary sealing portion blocks the first internal space and the second internal space from each other in a state in which a pressure of the first internal space is less than or equal to a predetermined pressure, and allows the first internal space and the second internal space to be in communication with each other in a state in which the pressure of the first internal space is higher than the predetermined pressure.
[4] The battery cell according to any one of [1] to [3],
   in which the battery element has a substantially rectangular parallelepiped shape including the two end surfaces and four side surfaces constituting the predetermined portion, and
   the second portion is drawn out from a portion that covers a first corner portion between a first side surface and a second side surface adjacent to each other among the four side surfaces in the first portion.
[5] The battery cell according to [4],
   in which the second portion is drawn out toward a second corner portion located between the first side surface and a third side surface, the third side surface being located opposite to the second side surface among the four side surfaces, and
   a length of the second portion from the first corner portion to the second corner portion is greater than or equal to 2/3 of a length of the first portion from the first corner portion to the second corner portion.
[6] The battery cell according to any one of [1] to [5], in which at least a part of the second internal space increases as the second internal space is separated from the first internal space.
[7] The battery cell according to any one of [1] to [6],
   in which a heat conductive element is thermally bonded to the first portion, and
   the second portion is drawn out from a position different from a position at which the first portion and the heat conductive element are thermally bonded to each other.
[8] The battery cell according to any one of [1] to [7], in which the second portion is pressed toward the first portion by an elastic material.
[9] A battery module including a plurality of the cells according to any one of [1] to [8], the cells being stacked in a predetermined direction.

### ADVANTAGEOUS EFFECTS OF INVENTION

According to the aspect of the present invention, a short circuit between adjacent battery cells can be suppressed.

### BRIEF DESCRIPTION OF THE DRAWINGS

[FIG. 1] A perspective view of a battery module according to an embodiment.
[FIG. 2] A perspective view of a battery cell according to the embodiment.
[FIG. 3] A right side view of a battery element according to the embodiment in a state where an exterior material is removed.
[FIG. 4] A cross-sectional view taken along line A-A of FIG. 2.
[FIG. 5] A perspective view of a battery cell according to Modification Example 1.
[FIG. 6] A diagram showing a modification example of FIG. 5.
[FIG. 7] A perspective view of a battery cell according to Modification Example 2.
[FIG. 8] A rear perspective view of a front cover member according to an example of the embodiment.

### DESCRIPTION OF EMBODIMENTS

Hereinafter, embodiments and modification examples of the present invention will be described with reference to the accompanying drawings. In all drawings, the same constituent elements are denoted by the same reference signs, and detailed description thereof will not be repeated.

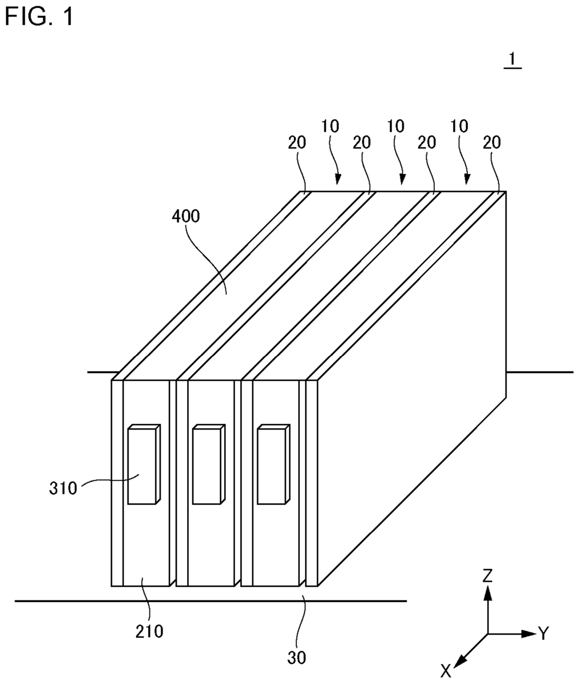

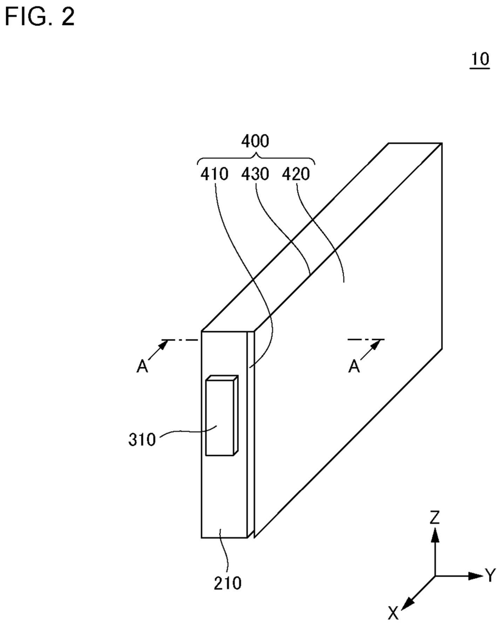

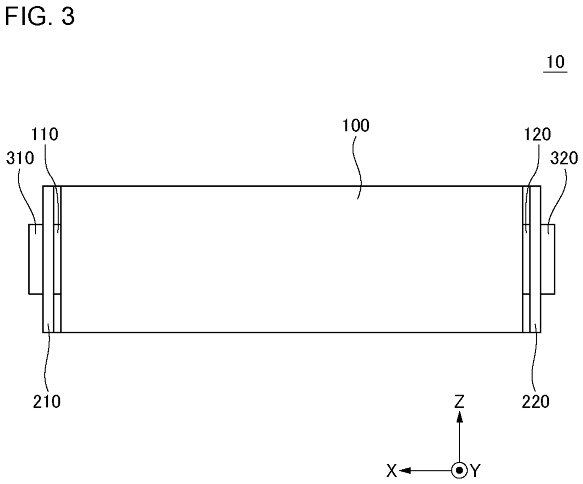

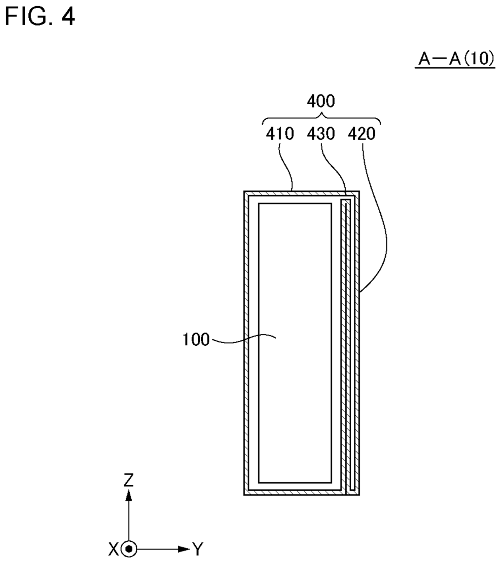

FIG. 1 is a perspective view of a battery module 1 according to an embodiment. FIG. 2 is a perspective view of a battery cell 10 according to the embodiment. FIG. 3 is a right side view of a battery element 100 according to the embodiment in a state where an exterior material 400 is removed. FIG. 4 is a cross-sectional view taken along line A-A of FIG. 2.

X direction, Y direction, and Z direction are shown in each drawing for description. The X direction indicates a front-rear direction of the battery cell 10. The Y direction is orthogonal to the X direction. The Y direction indicates a left-right direction of the battery cell 10. The Z direction is orthogonal to both the X direction and the Y direction. The Z direction indicates an up-down direction of the battery cell 10. A direction indicated by an arrow indicating the X direction, a direction indicated by an arrow indicating the Y direction, and a direction indicated by an arrow indicating the Z direction are a front direction, a right direction, and an up direction, respectively. However, the relationship between the X direction, the Y direction, the Z direction, the front-rear direction, the left-right direction, and the up-down direction of the battery cell 10 is not limited to this example. In FIGS. 3 and 4, a white circle with an X indicating the X direction or the Y direction indicates that a direction from the front to the back of the paper is a direction indicated by an arrow indicating the direction.

Hereinafter, as necessary, a side indicated by an arrow indicating the X direction and a side opposite to the side indicated by the arrow indicating the X direction will be referred to as a +X side and a -X side, respectively, a side indicated by an arrow indicating the Y direction and a side opposite to the side indicated by the arrow indicating the Y direction will be referred to as a +Y side and a -Y side, respectively, and a side indicated by an arrow indicating the Z direction and a side opposite to the side indicated by the arrow indicating the Z direction will be referred to as a +Z side and a -Z side, respectively.

Hereinafter, as necessary, a direction perpendicular to the X direction will be referred to as a YZ plane direction, a direction perpendicular to the Y direction will be referred to as a ZX plane direction, and a direction perpendicular to the Z direction will be referred to as an XY plane direction.

The battery module 1 will be described with reference to FIG. 1.

The battery module 1 according to the embodiment includes a plurality of battery cells 10, a plurality of elastic materials 20, and a heat conductive element 30.

The plurality of battery cells 10 are stacked substantially parallel to the Y direction. The battery cells 10 adjacent to each other in the Y direction are connected in series or in parallel via a front terminal 310 or a rear terminal 320, which will be described below. FIG. 1 schematically shows three battery cells 10. However, the number of battery cells 10 included in the battery module 1 is not limited to three, and may be two or four or more.

The plurality of elastic materials 20 and the plurality of battery cells 10 are alternately disposed in the Y direction. In the example shown in FIG. 1, each elastic material 20 has a substantially sheet shape extending substantially parallel to the ZX plane. In the embodiment, each elastic material 20 is, for example, a compression pad. The plurality of battery cells 10 and the plurality of elastic materials 20 are compressed in the Y direction by a plate (not shown) located on both sides of the plurality of battery cells 10 and the plurality of elastic materials 20 in the Y direction. Therefore, each battery cell 10 is pressed in the Y direction by the elastic material 20 adjacent to the battery cell 10. Therefore, it is possible to easily fix the position of each battery cell 10 in the Y direction as compared to a case where the elastic material 20 is not provided.

The upper surface of the heat conductive element 30 and the lower surface of each battery cell 10 are thermally bonded to each other. The heat conductive element 30 is, for example, a thermal glue or a heat dissipation sheet. In one example, the plurality of battery cells 10 are mounted on a lower plate of an accommodating body (not shown) that accommodates the plurality of battery cells 10 via the heat conductive element 30. Therefore, heat can be conducted between each battery cell 10 and the lower plate via the heat conductive element 30.

The battery cell 10 will be described with reference to FIGS. 2 to 4 and, as necessary, FIG. 1.

The battery cell 10 according to the embodiment includes a battery element 100, a front cover member 210, a rear cover member 220, a front terminal 310, a rear terminal 320, and an exterior material 400. The exterior material 400 includes an accommodation portion 410, a pocket portion 420, and a communication portion 430.

The battery element 100 has a substantially rectangular parallelepiped shape. A longitudinal direction of the battery element 100 is substantially parallel to the X direction. A lateral direction of the battery element 100 is substantially parallel to the Z direction. A thickness direction of the battery element 100 is substantially parallel to the Y direction. The battery element 100 has six surfaces including a front end surface, a rear end surface, an upper surface, a lower surface, a right surface, and a left surface.

The battery element 100 includes at least one positive electrode (not shown), at least one negative electrode (not shown), and at least one separator (not shown). For example, the plurality of positive electrodes and the plurality of negative electrodes are alternately stacked in the Y direction. At least a part of the separator is located between the positive electrode and the negative electrode adjacent to each other in the Y direction. Specifically, for example, each of the plurality of sheet-shaped separators is located between the positive electrode and the negative electrode adjacent to each other in the Y direction. However, one sheet-shaped separator may be alternately folded at an upper end part of the positive electrode and a lower end part of the negative electrode, or alternately folded at a lower end part of the positive electrode and an upper end part of the negative electrode. Alternatively, the positive electrode, the negative electrode, and the separator may be wound such that the separator is disposed between the positive electrode and the negative electrode. For example, the positive electrode, the negative electrode, and the separator are wound in a state where both surfaces of one of the positive electrode and the negative electrode are covered with the separator. In another example, a laminate including a plurality of unit laminates including the positive electrode, the separator, and the negative electrode in this order may be wound. However, the winding structure of the positive electrode, the negative electrode, and the separator is not limited to these examples.

In the embodiment, the battery cell 10 is a battery cell including an electrolyte. However, the battery cell 10 may be an all-solid-state battery. In the all-solid-state battery, a solid electrolyte layer is provided at a portion corresponding to the separator. The all-solid-state battery does not include an electrolyte. Hereinafter, the battery cell 10 will be described as a battery cell including an electrolyte unless otherwise specified.

The front cover member 210 covers the front end surface of the battery element 100. The front cover member 210 is made of, for example, at least one of a resin or a metal. The front cover member 210 has a substantially rectangular shape having a pair of short sides substantially parallel to the Y direction and a pair of long sides substantially parallel to the Z direction when viewed in the X direction.

The rear cover member 220 covers the rear end surface of the battery element 100. The rear cover member 220 is made of, for example, at least one of a resin or a metal. The rear cover member 220 has a substantially rectangular shape having a pair of short sides substantially parallel to the Y direction and a pair of long sides substantially parallel to the Z direction as viewed in the X direction.

The front terminal 310 is disposed on the front end surface side of the battery element 100. The front terminal 310 protrudes forward from the front cover member 210. The front terminal 310 is electrically connected to one of the positive electrode or the negative electrode included in the battery element 100 via a front current collector 110 that is drawn out from the front end surface of the battery element 100. In a case where the front terminal 310 and the positive electrode are electrically connected to each other, the front terminal 310 functions as a positive electrode terminal. In a case where the front terminal 310 and the negative electrode are electrically connected to each other, the front terminal 310 functions as a negative electrode terminal.

The rear terminal 320 is disposed on the rear end surface side of the battery element 100. The rear terminal 320 protrudes rearward from the rear cover member 220. The rear terminal 320 is electrically connected to the other of the positive electrode or the negative electrode included in the battery element 100 via a rear current collector 120 that is drawn out from the rear end surface of the battery element 100. Therefore, the polarity of the front terminal 310 and the polarity of the rear terminal 320 are different from each other. In a case where the rear terminal 320 and the positive electrode are electrically connected to each other, the rear terminal 320 functions as a positive electrode terminal. In a case where the rear terminal 320 and the negative electrode are electrically connected to each other, the rear terminal 320 functions as a negative electrode terminal.

The exterior material 400 is formed of, for example, a laminate film including a metal layer and resin layers provided on both surfaces of the metal layer.

The accommodation portion 410 is wound around the battery element 100, the front cover member 210, and the rear cover member 220 in one turn about the X direction. The accommodation portion 410 defines an internal space that accommodates the battery element 100 and an electrolyte (not shown). An inner peripheral surface of a front end part of the accommodation portion 410 and an outer peripheral surface of the front cover member 210 are bonded to each other by, for example, thermal welding. Therefore, the front end part of the accommodation portion 410 and the front cover member 210 form a sealing portion. An inner peripheral surface of a rear end part of the accommodation portion 410 and an outer peripheral surface of the rear cover member 220 are bonded to each other by, for example, thermal welding. Therefore, the rear end part of the accommodation portion 410 and the rear cover member 220 form a sealing portion. A laminate film at a side end part of the pocket portion 420, that is, a laminate film at a portion of the pocket portion 420 farthest from the accommodation portion 410 is bonded to another laminate film by, for example, thermal welding. Therefore, the side end part of the pocket portion 420 forms a sealing portion.

The pocket portion 420 is drawn out from a portion of the accommodation portion 410 that covers the upper right corner portion of the battery element 100 as a margin portion of the exterior material 400 with respect to the accommodation portion 410. However, the pocket portion 420 may be drawn out from a portion of the accommodation portion 410 that covers the other corner portion of the battery element 100. Alternatively, the pocket portion 420 may be drawn out from a portion of the accommodation portion 410 that covers the side surface of the battery element 100. In each of the front end part and the rear end part of the pocket portion 420, the laminate film constituting the exterior material 400 is bonded by, for example, thermal welding. Therefore, the front end part and the rear end part of the pocket portion 420 form a sealing portion. The pocket portion 420 defines an internal space for allowing a gas generated from the internal space of the accommodation portion 410 to enter.

The communication portion 430 defines a flow path of the above-described gas between the accommodation portion 410 and the pocket portion 420. In the embodiment, as shown in FIG. 4, the flow path of the communication portion 430 defines a space that communicates with the internal space of the accommodation portion 410 and the internal space of the pocket portion 420. Therefore, the accommodation portion 410 and the pocket portion 420 communicate with each other through the communication portion 430. Therefore, the gas generated from the internal space of the accommodation portion 410 can enter the internal space of the pocket portion 420 through the space defined by the flow path of the communication portion 430. The electrolyte that has entered the pocket portion 420 cannot function as the electrolyte of the battery element 100. Therefore, it is desirable that the electrolyte does not enter the pocket portion 420. However, a part of the electrolyte accommodated in the internal space of the accommodation portion 410 may enter the internal space of the pocket portion 420 through the communication portion 430.

The above-described gas is generated from the internal space of the accommodation portion 410 due to heat generated in the battery element 100, for example, due to an abnormality such as oxidation of the electrolyte or deposition of the metallic lithium. The pocket portion 420 has flexibility. Therefore, the pocket portion 420 is expanded by the gas that has entered the internal space of the pocket portion 420. The pocket portion 420 of each battery cell 10 is located between the battery cell 10 and the battery cell 10 located on the right side of the battery cell 10, except for the battery cell 10 on the right end side. Therefore, even in a case where the gas is generated in the internal space of the accommodation portion 410, the distance between the battery cells 10 adjacent to each other in the Y direction can be ensured by the expansion of the pocket portion 420. Therefore, it is possible to suppress the heat of the battery cell 10 in which the gas is generated from being transferred to the other battery cells 10.

Next, the battery module 1 will be described with reference to FIGS. 1 to 4.

The pocket portion 420 is drawn out from a portion that covers a predetermined portion between the front end surface and the rear end surface of the battery element 100 in the accommodation portion 410. Specifically, in the embodiment, the pocket portion 420 is drawn out from a portion that covers the upper right corner portion of the battery element 100 in the accommodation portion 410. Therefore, the short circuit between the battery cells 10 adjacent to each other in the Y direction can be suppressed as compared with a case where the pocket portion 420 is drawn out from the corner portion between the front end surface and the predetermined portion of the battery element 100 in the accommodation portion 410 or the corner portion between the rear end surface and the predetermined portion of the battery element 100 in the accommodation portion 410. Specifically, for example, a case where the pocket portion 420 is drawn out from the corner portion between the rear end surface and the right surface of the battery element 100 in the accommodation portion 410 will be considered. In this case, the front terminal 310 or the rear terminal 320 of the battery element 100 may rotate substantially parallel to the XY plane with the expansion of the pocket portion 420 and move toward the adjacent other battery cell 10. Therefore, the front terminal 310 or the rear terminal 320 of the battery element 100 may come into contact with the adjacent other battery cell 10 or may come into contact with the front terminal 310 or the rear terminal 320 of the adjacent other battery cell 10. On the other hand, in the embodiment, the front terminal 310 of the battery element 100 is less likely to rotate substantially parallel to the XY plane and less likely to move toward the adjacent battery cell 10 as compared with the case described above even in a case where the pocket portion 420 expands. Therefore, the short circuit between the battery cells 10 adjacent to each other in the Y direction can be suppressed as compared with the case described above.

In the embodiment, the pocket portion 420 is drawn out from the upper right corner portion to the lower right corner portion of the battery element 100. The length of the pocket portion 420 in the Z direction from the upper right corner portion to the lower right corner portion of the battery element 100 is substantially equal to the length of the accommodation portion 410 in the Z direction from the upper right corner portion to the lower right corner portion of the battery element 100. Therefore, the pocket portion 420 can be more uniformly expanded in the Y direction as compared with a case where the length of the pocket portion 420 in the Z direction from the upper right corner portion to the lower right corner portion of the battery element 100 is relatively short. However, the length of the pocket portion 420 in the Z direction from the upper right corner portion to the lower right corner portion of the battery element 100 may be shorter than the length of the accommodation portion 410 in the Z direction from the upper right corner portion to the lower right corner portion of the battery element 100. For example, the length of the pocket portion 420 in the Z direction from the upper right corner portion to the lower right corner portion of the battery element 100 may be greater than or equal to 2/3 times the length of the accommodation portion 410 in the Z direction from the upper right corner portion to the lower right corner portion of the battery element 100. In this example as well, the pocket portion 420 can be easily uniformly expanded in the Y direction.

In the embodiment, the lower surface of the accommodation portion 410 and the upper surface of the heat conductive element 30 are thermally bonded to each other. On the other hand, the pocket portion 420 is drawn out from a position different from the position at which the accommodation portion 410 and the heat conductive element 30 are thermally bonded to each other. Specifically, the pocket portion 420 is drawn out from a side of the accommodation portion 410 opposite to the heat conductive element 30. The communication portion 430 is likely to accumulate the gas generated from the internal space of the accommodation portion 410. Therefore, in a case where the communication portion 430 is located at the lower surface of the exterior material 400 or in the vicinity thereof, the heat conduction between the accommodation portion 410 and the heat conductive element 30 may be hindered by the gas accumulated in the communication portion 430. On the other hand, in the embodiment, the gas accumulated in the communication portion 430 can be prevented from hindering the heat conduction between the accommodation portion 410 and the heat conductive element 30.

In the embodiment, the pocket portion 420 is drawn out from an upper portion of the accommodation portion 410. Therefore, it is possible to make it difficult for the electrolyte to enter the pocket portion 420 from the accommodation portion 410, as compared to a case where the pocket portion 420 is drawn out from the lower portion of the accommodation portion 410. In other words, the communication portion 430 according to the embodiment constitutes a partition structure that blocks the electrolyte from entering the pocket portion 420 from the accommodation portion 410.

In the embodiment, in a state where each battery cell 10 is normally operated, the pocket portion 420 of each battery cell 10 is pressed toward the accommodation portion 410 by the elastic material 20 located on the right side of the battery cell 10. Therefore, in a state where each battery cell 10 is normally operated, the position of each battery cell 10 in the Y direction can be fixed by the elastic material 20. In a case where an abnormality occurs in the battery cell 10 and the pocket portion 420 expands, the elastic material 20 contracts in response to the expansion of the pocket portion 420. That is, by adjusting the physical property value of the elastic material 20, such as the elastic modulus in the Y direction and the thickness in the Y direction, the elastic material 20 can function as a fixing member that fixes the position of the battery cell 10 in the Y direction in a state where the battery cell 10 is normally operated, and can function as a buffer member that can contract in response to the expansion of the pocket portion 420 in a state where an abnormality occurs in the battery cell 10.

Next, an example of a manufacturing method of the battery cell 10 according to the embodiment will be described. In this example, the battery cell 10 is manufactured as follows.

First, the battery element 100 is formed. The front current collector 110 and the rear current collector 120 are drawn out from the front end surface and the rear end surface of the battery element 100, respectively.

Next, the front current collector 110 and the front terminal 310 are electrically connected to each other. The front terminal 310 is provided in advance in the front cover member 210. Similarly, the rear current collector 120 and the rear terminal 320 are electrically connected to each other. The rear terminal 320 is provided in advance in the rear cover member 220.

Next, the laminate film constituting the exterior material 400 is wound around the battery element 100, the front cover member 210, and the rear cover member 220 around the X direction to form the accommodation portion 410 and the pocket portion 420. Specifically, the outer peripheral surface of the front cover member 210 around the X direction and the inner peripheral surface of the front end part of the accommodation portion 410 around the X direction are bonded to each other by thermal welding. In addition, in the front end part of the pocket portion 420, the laminate films constituting the exterior material 400 are bonded to each other by thermal welding. Therefore, each of the front end parts of the accommodation portion 410 and the pocket portion 420 is sealed. Similarly, the outer peripheral surface of the rear cover member 220 around the X direction and the inner peripheral surface of the rear end part of the accommodation portion 410 around the X direction are bonded to each other by thermal welding. In addition, in the rear end part of the pocket portion 420, the laminate films constituting the exterior material 400 are bonded to each other by thermal welding. Therefore, each of the rear end parts of the accommodation portion 410 and the pocket portion 420 is sealed. In addition, the laminate films at the side end parts of the pocket portion 420, that is, the laminate films at portions of the pocket portion 420 that are farthest from the accommodation portion 410 are bonded to each other by thermal welding. Therefore, the side end part of the pocket portion 420 is sealed.

Next, the pocket portion 420 is drawn out from an upper portion of the accommodation portion 410 downward. Therefore, the communication portion 430 is located above the battery element 100. Next, the electrolyte is injected into the internal space of the accommodation portion 410 through the injection hole provided in at least one of the front cover member 210 or the rear cover member 220 in a state in which the communication portion 430 is located above the battery element 100. Therefore, it is possible to make it difficult for the electrolyte to enter the pocket portion 420 from the accommodation portion 410, as compared to a case where the electrolyte is injected into the internal space of the accommodation portion 410 in a state in which the communication portion 430 is located below the battery element 100. Next, the internal space of the accommodation portion 410 and the internal space of the pocket portion 420 are vacuum-sealed through the injection hole.

In this manner, the battery cell 10 is manufactured.

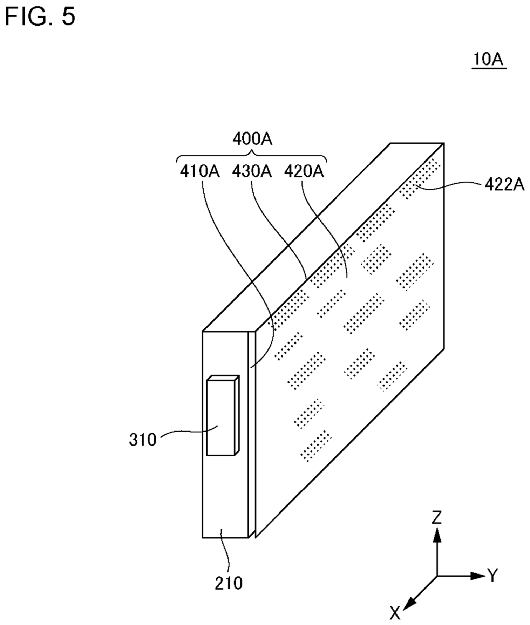

FIG. 5 is a perspective view of a battery cell 10A according to Modification Example 1. The battery cell 10A according to Modification Example 1 is the same as the battery cell 10 according to the embodiment except for the following points.

An exterior material 400A according to Modification Example 1 includes an accommodation portion 410A, a pocket portion 420A, and a communication portion 430A. The pocket portion 420A includes a plurality of sealing portions 422A. The internal space of the pocket portion 420A is sealed in each of the sealing portions 422A. In the example shown in FIG. 5, a plurality of columns including a plurality of the sealing portions 422A arranged substantially parallel to the X direction extend substantially parallel to the X direction. The sealing portions 422A included in each column are disposed with increasing density toward a lower end part of the sealing portion 422A. Therefore, the internal space of the pocket portion 420A increases from the internal space of the accommodation portion 410A between the upper end part and the lower end part of the pocket portion 420A.

In Modification Example 1, the pocket portion 420A can be uniformly expanded as compared to a case where the internal space of the pocket portion 420A is constant regardless of the distance from the internal space of the accommodation portion 410A. The upper end part of the pocket portion 420A is located near the accommodation portion 410A as compared to the lower end part of the pocket portion 420A. Therefore, in a case where the internal space of the pocket portion 420A is constant regardless of the distance from the internal space of the accommodation portion 410A, the upper end part of the pocket portion 420A is likely to be expanded as compared to the lower end part of the pocket portion 420A. On the other hand, in Modification Example 1, the sealing portion 422A is disposed at a high density at the upper end part of the pocket portion 420A as compared to the lower end part of the pocket portion 420A. Therefore, the expansion of the upper end part of the pocket portion 420A and the expansion of the lower end part of the pocket portion 420A are likely to be uniform.

In Modification Example 1, the pocket portion 420A is drawn out from a portion covering a predetermined portion between a front end surface and a rear end surface of the battery element 100 in the accommodation portion 410A. Therefore, as in the embodiment, the short circuit between the battery cells 10A adjacent to each other in the Y direction can be suppressed as compared to a case where the pocket portion 420A is drawn out from a corner portion between the front end surface of the battery element 100 and the predetermined portion in the accommodation portion 410A or from a corner portion between the rear end surface of the battery element 100 and the predetermined portion in the accommodation portion 410A.

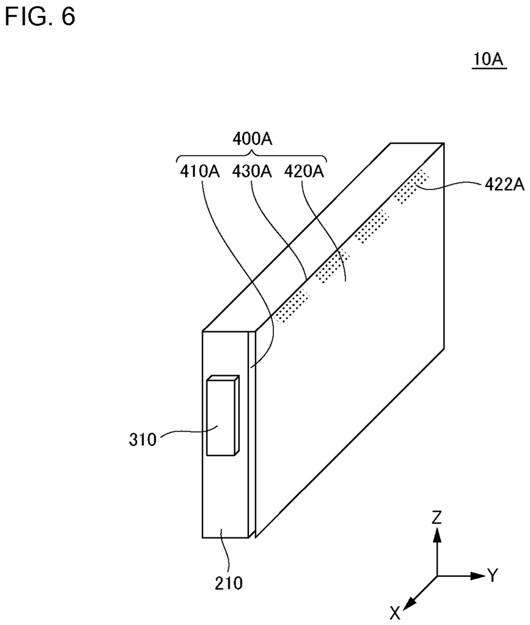

FIG. 6 is a diagram showing a modification example of FIG. 5.

In the example shown in FIG. 6, a plurality of sealing portions 422A are disposed in a direction substantially parallel to the X direction at the upper end part of the pocket portion 420A. On the other hand, the sealing portion 422A is not positioned at a portion located below the upper end part of the pocket portion 420A. Therefore, the internal space of the pocket portion 420A increases as the distance from the internal space of the accommodation portion 410A increases between the upper end part of the pocket portion 420A and a substantially central portion in the Z direction. Therefore, as in the example shown in FIG. 5, the pocket portion 420A can be uniformly expanded as compared to a case where the internal space of the pocket portion 420A is constant regardless of the distance from the internal space of the accommodation portion 410A.

The structure for uniformly expanding the pocket portion 420A is not limited to the examples described using FIGS. 5 and 6. That is, at least a part of the internal space of the pocket portion 420A may increase as the distance from the internal space of the accommodation portion 410A increases. In the examples shown in FIGS. 5 and 6, the distribution of the internal space of the accommodation portion 410A is adjusted by the sealing portion 422A. However, the distribution of the internal space of the accommodation portion 410A may be adjusted by a structure different from the sealing portion 422A. In addition, in the examples shown in FIGS. 5 and 6, the pocket portion 420A may be drawn out from a portion different from the portion that covers the predetermined portion of the battery element 100 in the accommodation portion 410A. Even in this case, in a case where at least a part of the internal space of the pocket portion 420A increases as the distance from the internal space of the accommodation portion 410A increases, the pocket portion 420A can be uniformly expanded.

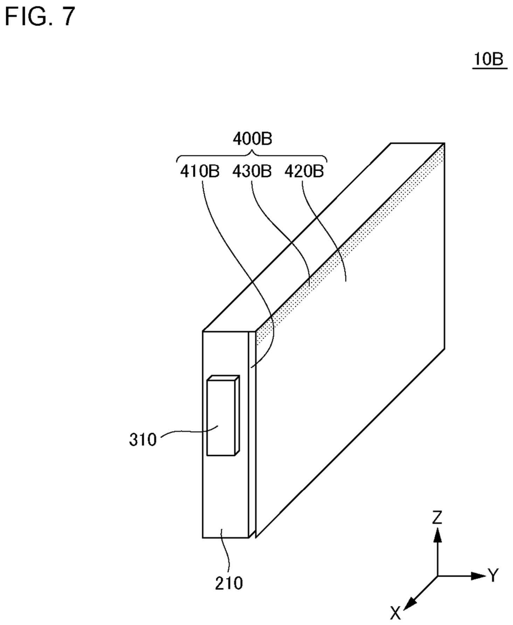

FIG. 7 is a perspective view of a battery cell 10B according to Modification Example 2. The battery cell 10B according to Modification Example 2 is the same as the battery cell 10 according to the embodiment, except for the following points.

An exterior material 400B according to Modification Example 2 includes an accommodation portion 410B, a pocket portion 420B, and a temporary sealing portion 430B. The temporary sealing portion 430B is located between the accommodation portion 410B and the pocket portion 420B. The temporary sealing portion 430B is formed, for example, by thermal welding the laminate film constituting the exterior material 400. A bonding strength of the laminate film in the temporary sealing portion 430B is lower than at least one of a bonding strength between a front end part of the accommodation portion 410 and a front cover member 210 in a sealing portion of a front end part of the accommodation portion 410, a bonding strength between a rear end part of the accommodation portion 410 and a rear cover member 220 in a sealing portion of a rear end part of the accommodation portion 410, or a bonding strength of the laminate film in sealing portions of a front end part, a rear end part, and a side end part of the pocket portion 420.

The temporary sealing portion 430B according to Modification Example 2 defines a gas flow path between the accommodation portion 410B and the pocket portion 420B. Specifically, in a state where an internal pressure of the accommodation portion 410B is less than or equal to a predetermined pressure, the temporary sealing portion 430B blocks the accommodation portion 410B and the pocket portion 420B from each other. Therefore, in a state where the internal pressure of the accommodation portion 410B is less than or equal to the predetermined pressure, the electrolyte in the internal space of the accommodation portion 410B can be prevented from entering the internal space of the pocket portion 420B. The predetermined pressure is, for example, a pressure in a state where the battery element 100 is normally operated. However, in a case where an abnormality occurs in the battery element 100 and a gas is generated in the internal space of the accommodation portion 410B, an internal pressure of the accommodation portion 410B may be higher than the predetermined pressure. In Modification Example 2, in a state where the internal pressure of the accommodation portion 410B is higher than the predetermined pressure, the laminate films constituting the temporary sealing portion 430B that are bonded to each other can be peeled off from each other. Therefore, in a state where the internal pressure of the accommodation portion 410B is higher than the predetermined pressure, the temporary sealing portion 430B communicates the internal space of the accommodation portion 410B with the internal space of the pocket portion 420B. Therefore, in Modification Example 2, as compared with the embodiment and Modification Example 1, the difference between the pressure in the internal space of the accommodation portion 410B and the pressure in the internal space of the pocket portion 420B can more strongly cause the gas to flow from the internal space of the accommodation portion 410B to the internal space of the pocket portion 420B.

**In** Modification Example 2, the pocket portion 420B is drawn out from a portion that covers a predetermined portion between the front end surface and the rear end surface of the battery element 100 in the accommodation portion 410B. Therefore, as in the embodiment, as compared with a case where the pocket portion 420B is drawn out from a portion that covers a corner portion between the front end surface of the battery element 100 and the predetermined portion in the accommodation portion 410B or a corner portion between the rear end surface of the battery element 100 and the predetermined portion in the accommodation portion 410B, the short circuit between the battery cells 10B adjacent to each other in the Y direction can be suppressed.

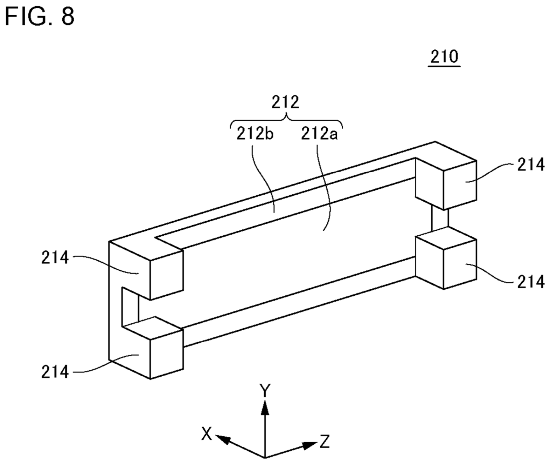

FIG. 8 is a rear perspective view of a front cover member 210 according to an example of the embodiment. The matters described with reference to FIG. 8 can be applied to the rear cover member 220 in the same manner.

The front cover member 210 includes a front base material portion 212 and a plurality of front protruding portions 214. The front base material portion 212 includes a metal portion 212a and a resin portion 212b.

From the X direction, the metal portion 212a has a substantially rectangular shape having a pair of short sides substantially parallel to the Y direction and a pair of long sides substantially parallel to the Z direction. The metal portion 212a has conductivity. Therefore, the metal portion 212a can also function as at least a part of a terminal that is electrically connected to the front current collector 110. In addition, the metal portion 212a has higher moisture blocking properties than the resin portion 212b. Therefore, moisture can be blocked by the front base material portion 212 as compared to a case where the entire front base material portion 212 consists of the resin portion 212b.

The resin portion 212b surrounds the metal portion 212a around the X direction. Therefore, the outer peripheral surface of the resin portion 212b around the X direction and the inner peripheral surface of the front end part of the accommodation portion 410 around the X direction can be bonded to each other. The resin portion 212b is more easily bonded to the exterior material 400 by thermal welding than the metal portion 212a. Therefore, the front cover member 210 and the exterior material 400 can be more firmly bonded to each other as compared to a case where the entire front base material portion 212 consists of the metal portion 212a.

In the example shown in FIG. 8, four front protruding portions 214 are located at four corner portions of the front base material portion 212 as viewed in the X direction. Each of the front protruding portions 214 is integrated with the resin portion 212b. Each of the front protruding portions 214 protrudes rearward. However, the disposition of the front protruding portions 214 is not limited to this example. For example, two front protruding portions 214 may extend along a pair of short sides of the front base material portion 212 that are substantially parallel to the Y direction. Alternatively, the front protruding portions 214 may extend along all sides of the front base material portion 212 as viewed in the X direction.

Although the embodiments and modification examples of the present invention have been described above with reference to the accompanying drawings, these are merely examples of the present invention, and various other configurations may be employed.

For example, in the embodiment and each modification example, the accommodation portion defines a first internal space in which the battery element 100 is accommodated, and the pocket portion defines a second internal space into which a gas generated from the first internal space enters. However, predetermined first and second portions of the exterior material 400 may each define the first internal space and the second internal space. The first and second portions of the exterior material 400 may be different from or the same as the accommodation portion and the pocket portion, respectively.

In addition, for example, in the embodiment and each modification example, the positive electrode terminal and the negative electrode terminal are disposed on opposite sides of the battery element 100 in the X direction. However, both the positive electrode terminal and the negative electrode terminal may be disposed on only one of the front end surface side or the rear end surface side of the battery element 100 in the X direction. In this case, for example, the front end surface and the rear end surface of the battery element 100 are covered by two cover members. Alternatively, only the end surface from which the positive electrode terminal and the negative electrode terminal of the battery element 100 are drawn out may be covered with the cover member. In this example, the exterior material 400 may be sealed on a side of the battery element 100 opposite to the cover member and may be folded along the battery element 100.

In addition, for example, in the embodiment and the modification example, the battery cell includes the front cover member 210 and the rear cover member 220. However, the battery cell may not include the front cover member 210 and the rear cover member 220.

In a case where the battery cell does not include the front cover member 210 and the rear cover member 220, for example, the exterior material may be a laminate film folded substantially in half. In this example, the laminate film is folded below the lower surface of the battery element 100, and one substantially half and the remaining substantially half of the laminate film cover both side surfaces of the battery element 100 in the Y direction. From the viewpoint of the Y direction, three sides of the front end surface, the rear end surface, and the upper surface of the battery element 100 in the laminate film are sealed. The pocket portion is drawn out from a portion that covers the upper surface of the battery element 100 in the accommodation portion.

In a case where the battery cell does not include the front cover member 210 and the rear cover member 220, for another example, the exterior material may be two laminate films that overlap each other in the Y direction via the battery element 100. In this example, from the viewpoint of the Y direction, four sides of the front end surface, the rear end surface, the lower surface, and the upper surface of the battery element 100 in the two laminate films are sealed. The pocket portion is drawn out from a portion that covers the upper surface of the battery element 100 in the accommodation portion.

This application claims priority based on Japanese Patent Application No. 2023-072105 filed on April 26, 2023, the entire disclosure of which is incorporated herein by reference.

### REFERENCE SIGNS LIST

10, 10A, 10B battery cell
20 elastic material
30 heat conductive element
100 battery element
110 front current collector
120 rear current collector
210 front cover member
212 front base material portion
212a metal portion
212b resin portion
214 front protruding portion
220 rear cover member
310 front terminal
320 rear terminal
400, 400A, 400B exterior material
410, 410A, 410B accommodation portion
420, 420A, 420B pocket portion
422A sealing portion
430, 430A communication portion
430B temporary sealing portion

## Claims

1. A battery cell comprising:
a battery element that has two end surfaces located opposite to each other and a predetermined portion located between the two end surfaces, and has a terminal disposed on at least one of the two end surfaces; and
an exterior material that has a first portion that defines a first internal space in which the battery element is accommodated and a second portion that defines a second internal space for allowing a gas generated from the first internal space to enter,
wherein the second portion is drawn out from a portion that covers the predetermined portion of the battery element in the first portion.

2. The battery cell according to claim 1, wherein the first internal space and the second internal space are in communication with each other.

3. The battery cell according to claim 1,
wherein the exterior material further has a temporary sealing portion located between the first portion and the second portion, and
the temporary sealing portion blocks the first internal space and the second internal space from each other in a state in which a pressure of the first internal space is less than or equal to a predetermined pressure, and allows the first internal space and the second internal space to be in communication with each other in a state in which the pressure of the first internal space is higher than the predetermined pressure.

4. The battery cell according to any one of claims 1 to 3,
wherein the battery element has a substantially rectangular parallelepiped shape including the two end surfaces and four side surfaces constituting the predetermined portion, and
the second portion is drawn out from a portion that covers a first corner portion between a first side surface and a second side surface adjacent to each other among the four side surfaces in the first portion.

5. The battery cell according to claim 4,
wherein the second portion is drawn out toward a second corner portion located between the first side surface and a third side surface, the third side surface being located opposite to the second side surface among the four side surfaces, and
a length of the second portion from the first corner portion to the second corner portion is greater than or equal to 2/3 of a length of the first portion from the first corner portion to the second corner portion.

6. The battery cell according to any one of claims 1 to 3,
wherein at least a part of the second internal space increases as the second internal space is separated from the first internal space.

7. The battery cell according to any one of claims 1 to 3,
wherein a heat conductive element is thermally bonded to the first portion, and
the second portion is drawn out from a position different from a position at which the first portion and the heat conductive element are thermally bonded to each other.

8. The battery cell according to any one of claims 1 to 3,
wherein the second portion is pressed toward the first portion by an elastic material.

9. A battery module comprising a plurality of the cells according to any one of claims 1 to 3, the cells being stacked in a predetermined direction.
